# EUROPÄISCHE PATENTSCHRIFT

(11) **EP 1 295 792 B1**
(45) Veröffentlichungstag und Bekanntmachung des Hinweises auf die Patenterteilung: **05.12.2007**
(21) Anmeldenummer: 02020939.1
(22) Anmeldetag: 19.09.2002
(51) Int. Cl.: B64D 45/00, G08B 13/00

(54) **Flugzeugkabinensicherungssystem**
Aircraft cabin security system
Système de securité pour cabine d'aéronef

(30) Priorität: 21.09.2001 DE 10146657
(43) Veröffentlichungstag der Anmeldung: 26.03.2003
(73) Patentinhaber: Airbus Deutschland GmbH, 21129 Hamburg (DE)
(72) Erfinder: Gleine, Wolfgang, Dr., 21255 Kakenstorf (DE)
(74) Vertreter: Hansmann, Dierk

(56) Entgegenhaltungen:
- DE-A- 19 732 806
- FR-A- 2 116 315
- FR-A- 2 641 397
- GB-A- 2 354 991

## Beschreibung

Die Erfindung bezieht sich auf eine Operationseinrichtung eines Verkehrsflugzeuges gemäß dem Oberbegriff des Anspruchs 1.

Die Einrichtung lässt sich zur Überwachung des Flugzeug-Rumpfinnenbereiches und zur prophylaktischen Verhinderung von gewalttätigen Handlungen mitfliegender Passagiere innerhalb des Flugzeug-Rumpfinnenbereiches (des Kabinenbereiches) einsetzen.

Es ist aus verschiedenen Ereignisse bekannt und es lässt sich zum Nachteil flugbegleitender Personen nicht ausschließen, dass Terroristen unerkannt die am Flughafen durchgeführten Kontrollen passieren und ein Passagierflugzeug entführen können. Eine Verschärfung der Kontrollen am Boden wird sicherlich dazu beitragen, dass es in Zukunft äußerst schwierig sein dürfte, diverse Waffen an Bord des betroffenen Flugzeuges zu schmuggeln. Dennoch, ist der Terrorist erst einmal an Bord, gibt es gegenwärtig keine wirksame Möglichkeit, eine Flugzeugentführung zu verhindern.

Im Prinzip ist es sogar denkbar, dass eine Gruppe Terroristen mit guter Nahkampfausbildung ohne Waffen und damit prinzipiell für die Bodenkontrollen unerkennbar an Bord eines Verkehrsflugzeuges gelangen können, mit umfunktionierbaren Gegenständen (z.B. Hosengürtel, Schnürbänder, Bleistifte, etc.) Piloten oder andere Flugzeuginsassen bedrohen oder töten und sich somit Gewalt über das Flugzeug verschaffen.

An Bord ist also ein Team von Terroristen nur durch besondere Maßnahmen zu stoppen, die aber erst noch eingeführt werden müssen. In der Öffentlichkeit wurde bereits die Möglichkeit von bewaffneten Begleitpersonen zum Schutz von Crew und Passagieren diskutiert. Hier setzt man aber eine bewaffnete Auseinandersetzung voraus, die auch fehlschlagen oder tragische Folgen haben kann: Tötung von Unbeteiligten, kritische Verletzung von Flugzeugstruktur oder Bordsystemen mit großem Gefährdungspotential bleibt nicht ausgeschlossen.

Aus der FR-A-2 641 397 ist eine Operationseinrichtung eines Verkehrsflugzeugs bekannt, durch welche ein Flugzeug vor Passagieren, welche das Flugzeug in ihre Gewalt bringen wollen, oder mit anderen verbrecherischen Absichten, geschützt werden soll. Im Mittelpunkt der bekannten Einrichtung steht eine Begasungsanlage mit einem speziellen Betäubungsgas, die von alarmierten Piloten in Aktion gebracht werden kann, um potentielle Gewalttäter außer Gefecht zu setzen. Die Piloten werden durch eine spezielle Alarmanlage über gewaltgeneigte oder terroristische Vorgänge in der Kabine aufmerksam gemacht. Diese Alarmanlage umfaßt eine elektronische Einheit, an welche Sensoren, beispielsweise auf laute menschliche Stimmen oder Schreie reagierend, Infrarotmeßeinrichtungen oder ähnliches, oder mobile, von Flugbegleitern betätigte Infrarotsender angeschlossen sind. Ein Auslösemechanismus der genannten Begasungsanlage ist ebenfalls an die elektronische Einheit angeschlossen. Eine weiter vorgesehene Videoüberwachungseinriehtung erlaubt die Betrachtung der Kabinensituation vom Cockpit aus. Bei dieser bekannten Einrichtung führt jedes erfaßte einschlägige Signal zum Alarm, was den Piloten unter Umständen unnötig ablenkt, möglicherweise sogar in flugsicherheitskritische Situationen. Es sind keine Maßnahmen vorgesehen, wie eine Falschauslösung des Alarms vermieden werden soll, ggf. könnten auch unnormal laute Geräusche, beispielsweise in der Gallay, Spülvorgänge von in der Nähe befindlichen Toiletten, Türzuschlagen, oder ähnliches den auf laute menschliche Stimmen oder Schreie reagierenden Sensor fehlleiten. Fehlalarme oder gar auf falschen Alarmen beruhende Auslösungen der Begasungsanlage mit all ihren Wirkungen können nicht zuverlässig vermieden werden.

Demzufolge liegt der Erfindung die Aufgabe zugrunde, dass an Bord eines Verkehrsflugzeuges gelangte Passagiere, die von gewalttätigen Handlungen besessen sind, schon zu Beginn ihrer Handlungen erkannt und wirksam passiviert werden, ohne dass lebensbedrohliche Risiken für die Flugzeug-Insassen oder gegenüber unbeteiligten Dritten erzeugt werden.

Diese Aufgabe wird durch die im Anspruch 1 angegebenen Maßnahmen gelöst. In den weiteren Unteransprüchen sind zweckmäßige Weiterbildungen und Ausgestaltungen dieser Maßnahmen angegeben.

Die Erfindung ist anhand von Ausführungsbeispielen in den beigefügten Zeichnungen näher dargestellt. Es zeigen:

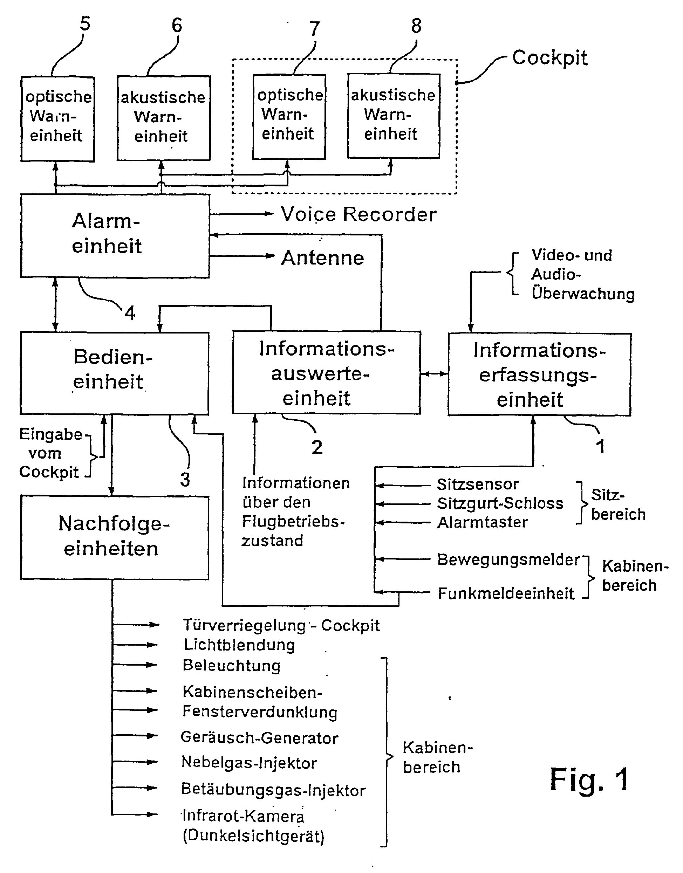

- Fig. 1: das Blockschaltbild einer Operationseinrichtung zum prophylaktischen Schutz eines Verkehrsflugzeuges.
**und**

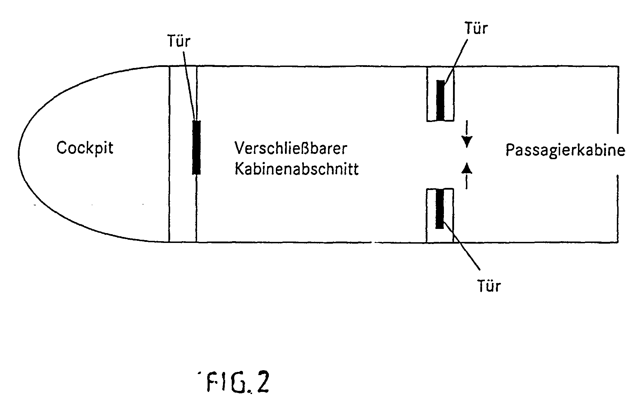

- Fig. 2: eine Draufsicht auf einen Flugzeugrumpf mit einem trennbaren Kabinenabschnitt.

Die Hauptelemente der sogenannten Operationseinrichtung (bzw. Kabinensicherungsanlage) bestehen aus einer Informationserfassungseinheit 1 mit angeschlossener sensorischer Erfassung, einer Informationsauswerteeinheit 2, einer Bedieneinheit 3, einer Alarmeinheit 4 mit den akustischen und optischen Warneinheiten 5 bis 8 und Nachfolgeeinheiten zum Betätigen von Aktionen, die flugsicherheitsgefährdende Handlungen an Bord eines Verkehrsflugzeuges verhindern.

Die Informationserfassungseinheit 1 erhält sensorisch oder durch Betätigung von Eingabeelementen Signale über den Sicherheitszustand in der Flugzeugkabine in Bezug auf mögliche flugsicherheitsgefährdende Handlungen.

Sensoren werden dabei die Besetzung eines Sitzplatzes (eines Flugzeugsitzes) überwachen - etwa durch Belastungssensoren oder den Schließzustand von Sicherheitsgurten. Im Kabinenbereich können Bewegungsmelder, die definierte Kabinenbereiche überwachen, oder auch Video- und Audioüberwachungseinrichtungen an die Informationserfassungseinheit 1 angeschlossen sein. Ebenso können Flugpassagiere, die bedrohliche Situationen erkennen, über im Bereich der Sitzplätze integrierte Alarmtaster, die eine Art "Nottaster" darstellen, welche gegen unbeabsichtigtes Betätigen gesichert sind, Meldungen an die Informationserfassungseinheit 1 abgeben. Flugbegleitern ist es möglich, über mitgeführte Funkmeldeeinheiten eine Früherkennung flugsicherheitsgefährdender Handlungen an die Informationserfassungseinheit 1 zu melden oder direkt über die Bedieneinheit 3 begrenzte Aktionen einzuleiten.

Die an die Informationserfassungseinheit 1 abgegebenen Zustandsinformationen (Signale) werden unmittelbar an eine Informationsauswerteeinheit 2 weitergeleitet, in der die erfassten Informationen mit dort abgelegten wissensbasierten Informationen verglichen werden.

Die Informationsauswertung basiert grundsätzlich auf dem Vergleich normaler und abnormaler Verhaltensweisen/Informationen. Eine mögliche Auswertelogik kann beispielsweise den angenommenen Fall abbilden, dass während der Flugphase innerhalb eines kleinen einstellbaren Zeitfensters gleichzeitig mehrere Passagiere (ein Eskalationsmerkmal könnte die Anzahl der Passagiere sein) aufstehen (Erfassung durch Sitzplatzsensoren) und in Richtung Cockpit gehen, wobei eine Erfassung durch zeitgestaffelte Signale von Bewegungsmeldern, die definierte, hinreichend kleine Bereiche der Kabine überwachen, geschehen wird. Dabei kann ein Eskalationsmerkmal die auswertbare Gehrichtung und Gehgeschwindigkeit sein. Im Normalfall stehen die Passagiere zeitlich nur sporadisch auf um beispielsweise die Toilette aufzusuchen.

Zur Erkennungsunterstützung diesbezüglich abnormaler Handlungen könnten Toiletten grundsätzlich nicht in Cockpitnähe eingebaut werden.

Im Fall dessen, dass die Informationsauswertung der Informationsauswerteeinheit 2 (durch Soll / IstVergleich) zum Ergebnis kommt, dass flugsicherheitsgefährdende Handlungen nicht auszuschließen sind, werden die Alarmeinheit 4 sowie die Bedieneinheit 3 aktiv geschaltet.

Eine direkte Aktivierung von Bedien- und Alarmeinheit 3, 4 ist auch durch Funkmeldeeinheiten (die das Flugbegleitungspersonal mitführt) möglich. Die Alarmeinheit 4 aktiviert optische und akustische Warneinheiten 5 bis 8, die sowohl für das Flugbegleitungspersonal als auch für die Cockpit-Crew deutlich wahrnehmbar sind. Gleichzeitig werden Aufzeichnungen über Voice- und Video-Recorder und Alarmmeldungen über mindestens eine angeschlossene Flugzeugantenne an bodengebundene Sicherheitsdienste aktiviert.

Die auf eine mögliche flugsicherheitsgefährdende Handlung aufmerksam gemachten Piloten im Cockpit können nun visuell und auch akustisch die Lage in der Flugzeugkabine beobachten und ggf. über die Bedieneinheit 3 entsprechende Aktionen zur Passivierung flugsicherheitsgefährdender Handlungen auslösen.

Je nach Dringlichkeit der erforderlichen Sicherheitsmaßnahmen, die von der Informationsauswerteeinheit 2 in Eskalations-Abstufungen bewertet wird oder auch durch Direkteingabe über vom Flugbegleitungspersonal mitgeführte Funkmeldeeinheiten, können auch automatische Aktionen ausgelöst werden (beispielsweise durch Türverriegelung des Cockpits, der Kabinenverdunklung, der Aktivierung der Infrarotkamera, des Nebelgas-Injektor, ect.). Die Injektion von Betäubungsgas in die Kabine kann sowohl vom Cockpit aus oder auch von den Flugbegleitern über ihre mitgeführten Funkmeldeeinheiten betätigt werden oder bei entsprechend hohen Eskalationsstufen, die von der Informationssauswerteeinheit 2 erkannt werden, automatisch ausgelöst werden. Dabei kann das Betäubungsgas in den Kabinenbereich (wahlweise) lokal (etwa im Bereich der Cockpit-Tür) oder in den gesamten Kabinenbereich injiziert werden. Durch Videoüberwachung ist der Vorgang vom Cockpit aus beobachtbar und steuerbar.

Das Cockpit muss selbstverständlich so belüftet sein, dass es betäubunsgasfrei gehalten werden kann. Das erfordert eine eigene Luftversorgung des Cockpits und ggf. einen leichten Luftüberdruck gegenüber der Kabine.

Zusätzliche Maßnahmen zur Unterbrechung der Kommunikation der Terroristen untereinander, zu deren Desorientierung sowie Reizüberflutung vor Injektion mit Betäubungsgas können sein:
- Blendung (z.B. durch Stroboskoplampen, die in der Kabine geeignet verteilt sind) und schlagartige Verdunklung der Kabine (Licht aus, Kabinenfenster durch automatische Rollos oder elektrooptisch verdunkelbare Folien abdunkeln);
- schlagartige Vernebelung der Kabine, die nach Passivierungsmaßnahme kurzfristig wieder aufhebbar ist (Einspeisung beispielsweise über die Luftverteilung der Klimaanlage oder direkte Einleitung in Kabinenbereiche oder die gesamte Kabine);
- zusätzliche laute Geräusche durch Lautsprecher oder pneumatisch betriebene Hörner zwecks Unterbrechung der Kommunikation.

An weiteren aktivierbaren Maßnahmen kann vorgesehen werden, dass der Fußboden des Kabinenbereichs unmittelbar vor der Cockpit-Tür als eine auslösbare Falltür ausgestaltet sein könnte, so dass identifizierte gewalttätige Personen in eine als Sicherheitskammer ausgebildete gasdichte Zelle fallen, die nach Schließen der Falltür mit einem Betäubungsgas geflutet werden kann. Die Sicherheitskammer kann ggf. so armiert sein, dass sie Gewaltanwendungen (körperlicher Art, Schüssen aus Waffen und Explosionen durch Sprengmittel) standhält.

Als mögliche Ausgestaltung der Kabinen- und Cockpitbelüftung können weiterhin folgende Konzepte vorgesehen werden. Gegenwärtig gibt es unterschiedliche Konzepte zur Luftversorgung: Im allgemeinen wird Frischluft (gekühlte Triebwerkszapfluft) und rezirkulierte Kabinenluft in einer Mischtonne vermischt, wobei über Abzweigungen einzelne Kabinenzonen und teilweise auch das Cockpit mit Mischluft versorgt werden. Es gibt aber auch den Fall, dass das Cockpit weitgehend ausschließlich mit Frischluft versorgt wird. Eine Garantie für eine völlige Abtrennung von rezirkulierter Luft von der Cockpit-Luftversorgung muss aber gewährleistet sein, um sicherzustellen, dass Piloten keinen Kontakt mit dem Betäubungsgas erhalten können.

Eine Lösungsmöglichkeit ist, dass für die Luftversorgung des Cockpits von der Rohrverbindung der gekühlten Triebwerkszapfluft (Frischluft) zur Mixereinheit eine Abzweigung zum Cockpit so weit vor der Zusammenführung mit rezirkulierter Luft realisiert wird, dass ein gegen die Luftströmung gerichtetes Eindringen von rezirkulierter und mit Betäubungsgas kontaminierter Luft in die stromaufwärts liegende Abzweigstelle ausgeschlossen wird.

Eine weitere Lösungsmöglichkeit oder zusätzliche Maßnahme ist, dass die Piloten vor Aktivierung des Betäubungsgases eine Schutzmaske mit entsprechender reiner Luftversorgung aufsetzen werden.

Als eine weitere nachgeschaltete Maßnahme (Nachfolgeeinheit) zur Bekämpfung terroristischer Überfälle in Verkehrsflugzeugen bietet sich an, mittels eines zusätzlichen, bei Bedarf verschließbaren Durchgangs zur Kabine einen Raum zwischen Cockpit und Passagierkabine zu schaffen, der durch die Rumpfseitenwände sowie Wand mit Tür zum Cockpit als auch Wand mit Tür zur Passagierkabine begrenzt wird. Durch entsprechende Mechanismen können beide Türen über das beschriebene System oder ersatzweise manuell aus dem Bereich außerhalb des Raumes geöffnet oder verschlossen werden.

Hierbei ist folgende Überlegung berücksichtigt:
bei einem Überfall, bei dem die Erstürmung des Cockpits vorgesehen ist, müssen die Terroristen zwangsläufig den Kabinenabschnitt zwischen der Tür zum Cockpit und der Tür zur Passagierkabine betreten. Hier können nun entweder automatisch oder manuell die Türen verschlossen werden, sobald die Terroristen sich innerhalb des genannten Kabinenabschnittes aufhalten. Nachfolgend können dann wie vorgesehen und vorstehend ausgeführt wurde, entsprechende Maßnahmen zur Passiverung der Terroristen (z. B. Betäubungsgas etc) vorgenommen werden. Dazu sollte der Kabinenabschnitt hermetisch abdichtbar sein.

## Patentansprüche

1. Operationseinrichtung eines Verkehrsflugzeugs, die zur Überwachung des Flugzeug-Rumpfinnenbereichs und zur prophylaktischen Verhinderung von gewalttätigen Handlungen mitfliegender Passagiere innerhalb dessen vorgesehen ist, mit einer Informationserfassungseinheit (1), einer Informationsauswerteeinheit (2), die miteinander verbunden sind und im aktivierten Zustand gegenseitig ständig Informationen austauschen, und einer Bedieneinheit (3) und einer Alarmeinheit (4), die mit der Informationsauswerteeinheit (2) und auch zueinander direkt verbunden sind und von dieser ausgewertete Informationen erhalten, wobei die Alarmeinheit (4) die bezogenen Informationen in akustische und/oder optische Warnsignale umsetzt und wobei die Bedieneinheit (3) die bezogenen Informationen in entsprechende Stellbefehle wandelt, wobei mit der Alarmeinheit (4) wenigstens eine optische und/oder eine akustische Wameinheit verbunden ist, die an definierten Stellen im Kabinenbereich, der einem gegen diesen abgegrenzten Cockpitbereich nachgeordnet ist, positioniert sind, und deutlich wahrnehmbar optische und/oder akustische Warninformationen abgeben, wobei dem Cockpitbereich ebenfalls eine optische und/oder akustische Wameinheit zugeschaltet ist, die jeweils nach Betätigung eines Freischaltelements, das insbesondere nahegelegen der im Flugzeug-Rumpfinnenbereich installierten Warneinheiten positioniert ist, optische und/oder akustische Warninformationen abgibt, und wobei an der Bedieneinheit (3) verschiedenartige Nachfolgeeinheiten angeschlossen sind, die nach dem Empfang eines entsprechenden Stellbefehls definierte Sicherheitsfunktionen zum Schutz der im Flugzeuginnenbereich befindlichen Personen umsetzen, und wobei die Informationserfassungseinheit (1) mit verschiedenartigen Informationserfassungsgeräten und/oder Informationswledergabegeräten verbunden ist, **dadurch gekennzeichnet, dass** die Informationsauswerteeinheit (2) mit einer Auswertelogik ausgestattet ist, mit der ein Soll/Ist-Vergleich der von den Informationserfassungs- und Informationswiedergabegeräten der Informationserfassungseinheit (1) übermittelten Zustandsinformationen mit in ihr gespeicherten Sollvorgabe-Informationen vorgenommen wird und die das ermittelte Vergleichsergebnis an die Bedieneinheit (3) und/oder an die Alarmeinheit (4) weiterleitet, sofern eine feststehende Schwellinformation, die dem kritischen Zustand einer gefahrdrohenden Situation im Kabinenbereich entspricht, Überschritten wird.

2. Operationseinrichtung nach Anspruch 1, **dadurch gekennzeichnet, dass** die in der Informationsauswerteeinheit (2) vorgesehene Auswertelogik dazu vorgesehen ist, die ihr übermittelten Zustandsinformationen nach Eskalations-Abstufungen zu bewerten und auch automatische Aktionen auszulösen.

3. Operationseinrichtung nach Anspruch 1 oder 2, **dadurch gekennzeichnet, dass** die Auswertelogik der Informationsauswerteeinheit (2) auch zur Aufnahme von ihr zugeleiteten Flugbetriebsinformationen vorgesehen ist, die bei der Auswertung der von den Informationserfassungs- und Informationswiedergabegeräten übermittelten Zustandsinformationen berücksichtigt werden.

4. Operationseinrichtung nach Anspruch 1, **dadurch gekennzeichnet, dass** die mit der Informationserfassungseinheit (1) verbundenen verschiedenartigen Informationserfassungsgeräte im Sitzbereich des Kabinenbereichs und an definierten Stellen im Kabinenbereich installiert sind und dass ortsveränderlich bewegliche Informationswiedergabegeräte vorgesehen sind.

5. Operationseinrichtung nach Anspruch 1, **dadurch gekennzeichnet, dass** die Bedieneinheit (3) schaltungstechnisch jeweils mit einer Nachfolgeeinheit für eine Türverriegelung des Cockpits, für eine Beleuchtungsabschaltung des Kabinenbereichs, für eine Lichtblendung in den Kabinenbereich, für eine Kabinenscheiben-Fensterverdunkelung des Kabinenbereichs, für eine Beschallung des Kabinenbereichs, für eine Nebelgaszuführung in den Kabinenbereich, für eine Betäubungsgaszuführung in den Kabinenbereich und/oder für eine Dunkelsichtüberwachung des Kabinenbereichs verbunden ist, wobei in der jeweils betreffenden Nachfolgeeinheit vorgesehene Schalt- oder Überwachungsgeräte jeweils elektrisch oder elektronisch ansprechbar sind und durch den betreffenden Stellbefehl aktivierbar sind und die beabsichtigte Sicherheitsfunktion auslösen.

6. Operationseinrichtung nach Anspruch 1, **dadurch gekennzeichnet, dass** die Bedieneinheit (3) schaltungstechnisch mit einer Handbetätigung und einer Automatik ausgestattet ist, die insbesondere im Cockpit installiert ist.

7. Operationseinrichtung nach Anspruch 5, **dadurch gekennzeichnet, dass** die Türverriegelung mit einem elektrischen oder elektronischen Schaltgerät ausgestattet ist, das eine hermetisch dichte und mechanisch feste Verriegelung der Cockpittür veranlaßt.

8. Operationseinrichtung nach Anspruch 5, **dadurch gekennzeichnet, dass** die Beleuchtungsabschaltung mit einem elektrischen oder elektronischen Schaltgerät ausgestattet ist, das eine, insbesondere unverzögerte, Abschaltung der Kabinenraumbeleuchtung veranlaßt.

9. Operationseinrichtung nach Anspruch 5, **dadurch gekennzeichnet, dass** die Lichtblendung in dem Kabinenbereich mit einem elektrischen oder elektronischen Schaltgerät ausgestattet ist, das mit einer Lichtblendeinrichtung, insbesondere einem Stroboskop, die Lichtblendung von sich im Kabinenbereich bewegenden Personen, sofern die Beleuchtungsabschaltung der Kabinenraumbeleuchtung geschehen ist, veranlaßt.

10. Operationseinrichtung nach Anspruch 5, **dadurch gekennzeichnet, dass** die Kabinenscheiben-Fensterverdunkelung mit einem elektrischen oder elektronischen Schaltgerät ausgestattet ist, die die Verdunkelung der Kabinenfenster-Innenscheibe veranlaßt.

11. Operationseinrichtung nach Anspruch 5, **dadurch gekennzeichnet, dass** die Nachfolgeeinheit für die Beschallung mit einem elektrischen oder elektronischen Schaltgerät ausgestattet ist, das mit einem Geräuschgenerator zur Beschallung des Kabinenbereichs verbunden ist.

12. Operationseinrichtung nach Anspruch 5, **dadurch gekennzeichnet, dass** die Nebelgaszuführung mit einem elektrischen oder elektronischen Schaltgerät ausgestattet ist, mit dem die Nebelgaszufuhr eines mit Nebelgas gefüllten Nebelgasspeichers freigeschaltet wird, wobei das Nebelgas Nebelgasinjektoren, die an definierten Stellen im Kabinenbereich installiert sind, über Rohrleitungen und von dort in den Kabinen- und/oder Teilkabinenbereich zuführbar ist.

13. Operationseinrichtung nach Anspruch 5, **dadurch gekennzeichnet, dass** die Betäubungsgaszuführung mit einem elektrischen oder elektronischen Schaltgerät ausgestattet ist, mit dem die Betäubungsgaszufuhr eines mit Betäubungsgas gefüllten Betäubungsgasspeichers freigeschaltet wird, wobei das Betäubungsgas Betäubungsgasinjektoren, die an definierten Stellen im Kabinenbereich und/oder an geeigneten Stellen des Luftverteilungssystems der Klimaanlage installiert sind, über Rohrleitungen und von dort in den Kabinenbereich zuführbar ist.

14. Operationseinrichtung nach den Ansprüchen 12 und 13, **dadurch gekennzeichnet, dass** ein Gasinjektor an definierten Stellen im Kabinenbereich installiert ist, dem die mit dem Nebel- und/oder Betäubungsgasspeicher verbundenen Rohrleitungen zugeschaltet sind.

15. Operationseinrichtung nach Anspruch 5, **dadurch gekennzeichnet, dass** die Dunkelsichtüberwachung mit einem elektronischen Überwachungsgerät ausgestattet ist, das an definierten Stellen im Kabinenbereich installiert ist.

16. Operationseinrichtung nach Anspruch 15, **dadurch gekennzeichnet, dass** das Überwachungsgerät ein Dunkelsichtgerät, vorzugsweise eine Infrarotkamera ist, das nach geschehener Verdunkelung des Kabinenbereichs dessen ungehinderte Beobachtung vornimmt.

17. Operationseinrichtung nach Anspruch 16, **dadurch gekennzeichnet, dass** wenigstens den Dunkelsichtgeräten, welche eine dem Cockpit nahegelegenen definierten Kabinenabschnitt und / oder einen sensibel definierten Kabinenabschnitt überwachen, eine Selbstverteidigungseinheit zugeschaltet ist, die mit der Funktionsaufnahme des betreffenden Dunkelsichtgeräts aktivierbar ist und bei registrierten Bewegungsabläufen auslöst.

18. Operationseinrichtung nach Anspruch 4, **dadurch gekennzeichnet, dass** ein Sitzsensor, der innerhalb der Sitzfläche eines jeden Flugzeugsitzes angeordnet ist, ein Sitzgurtschloß, das den Sitzgurt eines jeden Flugsitzes schließt, und ein Alarmtaster, der im Handbereich eines jeden Flugzeugsitzes angeordnet ist, den im Sitzbereich installierten Informationserfassungsgeräten zugeordnet sind, welche entsprechende Zustandsinformationen der Überwachung an die Informationserfassungseinheit (1) übermitteln.

19. Operationseinrichtung nach Anspruch 4, **dadurch gekennzeichnet, dass** mehrere Bewegungsmelder, vorzugsweise Infrarotbewegungsmelder, in Richtung der Flugzeugrumpflängsachse an der Wandstruktur seitwärts der Sitzreihen installiert sind, welche definierte Stellen des Kabinenbereichs beobachten und mit der Informationserfassungseinheit (1) verbunden sind und an letzterer entsprechende Zustandsinformationenbezüglich der Bewegung von mitfliegenden Passagieren oder des flugbegleitenden Personals im Kabinenbereich übermitteln.

20. Operationseinrichtung nach Anspruch 4, **dadurch gekennzeichnet, dass** eine Video- und Audio-Überwachung, die vorzugsweise mit einer Videokamera und einem Geräuschmikrofon realisiert ist, im Kabinenbereich installiert ist, welche definierte Stellen des Kabinenbereichs beobachtet und mit der Informationserfassungseinheit (1) verbunden ist, und letzterer visuelle und/oder akustische Zustandsinformationen von mitfliegenden Passagieren oder des flugbegleitenden Personals im Kabinenbereich übermittelt.

21. Operationseinrichtung nach Anspruch 1, **dadurch gekennzeichnet, dass** das einzelne Informationswiedergabegerät eine Funkmeldeeinheit ist, die vorzugsweise im Rahmen eines definierten Frequenzbereichs mit der Informationserfassungseinheit (1) funktechnisch verbunden ist, durch deren Kommunikation die Alarmeinheit (4) aktivierbar ist.

22. Operationseinrichtung nach Anspruch 1, **dadurch gekennzeichnet, dass** an die Alarmeinheit (4) eine Flugzeugantenne und ein Voice- und/oder Video-Recorder angeschlossen ist, denen die akustischen und/oder optischen Warninformationen zugeleitet werden, wobei über die Flugzeugantenne die nächstliegende Bodenstation auf dem Funkweg erreichbar ist und die gesendeten Warninformationen empfangen und gespeichert werden.

23. Operationseinrichtung nach Anspruch 21, **dadurch gekennzeichnet, dass** das Informationswiedergabegerät mit der Bedieneinheit (3) funktechnisch verbunden ist.

24. Operationseinrichtung nach Anspruch 18, **dadurch gekennzeichnet, dass** der Sitzsensor mit einem Druck- oder Lastsensor realisiert ist.

25. Operationseinrichtung nach Anspruch 18, **dadurch gekennzeichnet, dass** die metallenen Sitzgurtenden, die ein Schließen des Sitzgurtschlosses umsetzen, mit einer elektrischen oder elektronischen Schaltung verbunden sind, wobei durch ein Öffnen des Sitzgurtschlosses eine entsprechende Zustandsinformation veranlaßt wird.

26. Operationseinrichtung nach Anspruch 18, **dadurch gekennzeichnet, dass** der Alarmtaster ein handbetätigter Drucktaster ist, der mit einer elektrischen oder elektronischen Schaltung verbunden ist, die an die Informationserfassungseinheit eine entsprechende Zustandsinformation übermittelt.

27. Operationseinrichtung nach Anspruch 17, **dadurch gekennzeichnet, dass** in dem Kabinenabschnitt, der dem Cockpit nahegelegen und durch das Dunkelsichtgerät überwacht ist, im Bodenbereich eine gasdicht schließende, klappbare Falltür vorgesehen ist, die mit einem Antrieb ausgestattet ist, der durch die Bedieneinheit (3) aktiviert wird, wobei unterhalb dieser Falltür eine Sicherheitszelle angeordnet ist, die mit der Falltüreinfassung verbunden ist, und wobei durch Öffnen der Falltür die Öffnung der Sicherheitszelle freigegeben und nachfolgend diese Öffnung sofort wieder verschlossen wird.

28. Operationseinrichtung nach Anspruch 27, **dadurch gekennzeichnet, dass** die Sicherheitszelle, die unterhalb des Fußboden in einen unteren Rumpfbereich ragt, gasdicht und sprengstoffest ausgebildet ist und sich mit Betäubungsgas befüllen läßt.

29. Operationseinrichtung nach Anspruch 1, 17 oder 29, **dadurch gekennzeichnet, dass** der Kabinenabschnitt, der dem Cockpit nahegelegen und durch das Dunkelsichtgerät überwacht ist, zusätzlich durch eine Schutzwand abgeschottet ist, die mit einer Schutztür ausgerüstet ist, deren Türbewegung durch eine in die Schutztür integrierte Türsteuereinheit, welche mit der Bedieneinheit (3) informationstechnisch verbunden ist, umgesetzt wird, wobei die Schutzwand quer zur Flugzeugrumpflängsachse und parallel einer türverschließbaren Cockpitwand angeordnet ist, und die außerdem durch den Wand- und Deckenbereich des Flugzeugrumpfs eingefaßt und an der Rumpfstruktur befestigt oder direkt an dem Wand- und Deckenbereich befestigt ist.

30. Operationseinrichtung nach Anspruch 29, **dadurch gekennzeichnet, dass** die Schutztür innerhalb einer Schutzwand-Türöffnung angeordnet und scharnierbeweglich an der Schutzwand zum Kabinenabschnitt einseitig klappbar befestigt ist, und außerdem die Türsteuereinheit, welche eine durch die Bedieneinheit (3) aktivierte Schamierbewegung veranlaßt, innerhalb der Schutztür angeordnet ist, die funktechnisch oder über Steuer- und Signalleitungen mit der Bedieneinheit (3) verbunden ist.

31. Operationseinrichtung nach Anspruch 29, **dadurch gekennzeichnet, dass** die Schutzwand mit einer ersten und zweiten Schottwand doppelwandig ausgeführt ist und die Schutztür schienen- oder rollenbeweglich zwischen den beiden Schottwänden angeordnet ist, an der oder innerhalb der am nicht sichtbaren Kanten- oder Rand-Türbereich, der sich in Richtung der Flugzeughochachse erstreckt und den die beiden Schutzwände verbergen, die Türsteuereinheit positioniert ist, die funktechnisch oder über Steuer- und Signalleitungen mit der Bedieneinheit (3) verbunden ist und auf Information durch die Bedieneinheit (3) die Türbewegung veranlaßt.

32. Operationseinrichtung nach den Ansprüchen 29 bis 31, **dadurch gekennzeichnet, dass** der Zwischenraum, den die Schutzwand und die Cockpitwand eingrenzen, zur Passivierung mitfliegender Passagiere, von denen gewalttätigen Handlungen ausgehen oder erkennbar sind, hermetisch und gasdicht abgedichtet und durch ein Betäubungsgas befüllbar ist.

33. Operationseinrichtung nach den Ansprüchen 29 bis 31, **dadurch gekennzeichnet, dass** die Schutztür gegen die Schutzwand und eine Cockpittür gegen die Cockpitwand hermetisch und gasdicht abgedichtet sind.

## Claims

1. Operational device of a commercial aircraft that is provided for monitoring the inner area of the aircraft fuselage and for the prophylactic prevention of acts of violence of fellow passengers within said area, comprising a data acquisition unit (1), a data evaluation unit (2), which are connected to one another and in the active state continuously exchange data, and a control unit (3) and an alarm unit (4), which are directly connected to the data evaluation unit (2) and also to one another and receive evaluated data from the data evaluation unit (2), wherein the alarm unit (4) converts the specific data into audible and/or visual alarm signals and wherein the control unit (3) converts the specific data into corresponding control commands, wherein there is connected to the alarm unit (4) at least one visual and/or one audible alarm unit, which are positioned at defined points in the cabin area disposed aft of a delimited cockpit area and produce clearly discernible visual and/or audible alarm data, wherein there is likewise connected to the cockpit area a visual and/or audible alarm unit, which produces visual and/or audible alarm data in each case after actuation of a safety isolation element that is positioned in particular in the vicinity of the alarm units installed in the inner region of the aircraft fuselage, and wherein there are connected to the control unit (3) successor units of various types, which after receiving a corresponding control command initiate defined security functions for the protection of the persons situated in the inner region of the aircraft, and wherein the data acquisition unit (1) is connected to data acquisition devices and/or data reproduction devices of various types, **characterized in that** the data evaluation unit (2) is equipped with an evaluation logic, which effects a setpoint/actual-value comparison of the status data communicated by the data acquisition- and data reproduction devices of the data acquisition unit (1) with setpoint selection data stored in it and which relays the determined comparison result to the control unit (3) and/or to the alarm unit (4) if a fixed threshold datum corresponding to the critical status of a threatening situation in the cabin area is exceeded.

2. Operational device according to claim 1, **characterized in that** the evaluation logic provided in the data evaluation unit (2) is provided for assessing the status data communicated to it according to escalation stages and also for initiating automatic actions.

3. Operational device according to claim 1 or 2, **characterized in that** the evaluation logic of the data evaluation unit (2) is provided also for receiving incoming air traffic data, which are taken into account during the evaluation of the status data communicated by the data acquisition- and data reproduction devices.

4. Operational device according to claim 1, **characterized in that** the various types of data acquisition devices connected to the data acquisition unit (1) are installed in the seating area of the cabin area and at defined points in the cabin area, and that data reproduction devices that are movable to different locations are provided.

5. Operational device according to claim 1, **characterized in that** the control unit (3) has a circuit connection in each case to a successor unit for locking the cockpit door, for disconnecting the lights of the cabin area, for injecting dazzling light into the cabin area, for darkening the cabin window panes of the cabin area, for noise exposure of the cabin area, for feeding smoke gas into the cabin area, for feeding knock-out gas into the cabin area and/or for night-vision monitoring of the cabin area, wherein switching- and/or monitoring devices provided in the relevant successor unit are each electrically or electronically operable and may be activated by the relevant control command and initiate the intended security function.

6. Operational device according to claim 1, **characterized in that** the control unit (3) in terms of circuitry is equipped with a manual operating device and an automatic device, which is installed in particular in the cockpit.

7. Operational device according to claim 5, **characterized in that** the door locking unit is equipped with an electrical or electronic switching device that brings about hermetically sealed and mechanically stable locking of the cockpit door.

8. Operational device according to claim 5, **characterized in that** the light disconnection unit is equipped with an electrical or electronic switching device that brings about an, in particular immediate, disconnection of the lights of the cabin area.

9. Operational device according to claim 5, **characterized in that** the dazzling light unit in the cabin area is equipped with an electrical or electronic switching device, which brings about the dazzling by means of a dazzling light device, in particular a stroboscope, of persons moving in the cabin area once the disconnection of the lights of the cabin area has occurred.

10. Operational device according to claim 5, **characterized in that** the cabin window pane darkening unit is equipped with an electrical or electronic switching device that brings about the darkening of the cabin inner window pane.

11. Operational device according to claim 5, **characterized in that** the noise exposure successor unit is equipped with an electrical or electronic switching device, which is connected to a noise generator for exposing the cabin area to noise.

12. Operational device according to claim 5, **characterized in that** the smoke gas feed unit is equipped with an electrical or electronic switching device, by means of which the smoke gas supply of a smoke gas reservoir filled with smoke gas is isolated, wherein the smoke gas is feedable through pipes to smoke gas injectors, which are installed at defined points in the cabin area, and from there into the cabin area and/or cabin sub-areas.

13. Operational device according to claim 5, **characterized in that** the knock-out gas feed unit is equipped with an electrical or electronic switching device, by means of which the knock-out gas supply of a knock-out gas reservoir filled with knock-out gas is isolated, wherein the knock-out gas is feedable through pipes to knock-out gas injectors, which are installed at defined points in the cabin area and/or at suitable points of the air distribution system of the air conditioning system, and from there into the cabin area.

14. Operational device according to claims 12 and 13, **characterized in that** a gas injector in installed at defined points in the cabin area and is connected up to the pipes connected to the smoke gas- and/or knock-out gas reservoir.

15. Operational device according to claim 5, **characterized in that** the night-vision monitoring unit is equipped with an electronic monitoring device, which is installed at defined points in the cabin area.

16. Operational device according to claim 15, **characterized in that** the monitoring device is a night-vision device, preferably an infrared camera, which, after darkening of the cabin area has occurred, carries out unobstructed observation of the cabin area.

17. Operational device according to claim 16, **characterized in that** at least the night-vision devices that monitor a defined cabin portion located near the cockpit and/or a cabin portion defined as sensitive are connected up to a self-defence unit, which may be activated by the start of operation of the relevant night-vision device and trips in the event of registered sequences of movement.

18. Operational device according to claim 4, **characterized in that** a seat sensor disposed inside the seat area of each aircraft seat, a seat belt buckle that fastens the seat belt of each aircraft seat, and an alarm button disposed in the hand region of each aircraft seat are associated with the data acquisition devices installed in the seating area and communicate corresponding status monitoring data to the data acquisition unit (1).

19. Operational device according to claim 4, **characterized in that** a plurality of motion detectors, preferably infrared motion detectors, are installed in the direction of the fuselage longitudinal axis on the wall structure laterally of the seat rows and observe defined points of the cabin area and are connected to the data acquisition unit (1) and communicate to said unit corresponding status data regarding the movement of fellow passengers or members of the cabin crew in the cabin area.

20. Operational device according to claim 4, **characterized in that** a video and audio monitoring system, that is preferably realized by a video camera and a sound microphone, is installed in the cabin area, observes defined points of the cabin area and is connected to the data acquisition unit (1) and communicates to said unit visual and/or audible status data regarding fellow passengers or members of the cabin crew in the cabin area.

21. Operational device according to claim 1, **characterized in that** the single data reproduction device is a radio signalling unit, which preferably has a radio link in a defined frequency range to the data acquisition unit (1) and by the communication of which the alarm unit (4) may be activated.

22. Operational unit according to claim 1, **characterized in that** there are connected to the alarm unit (4) an aircraft antenna and a voice and/or video recorder, to which the audible and/or visual alarm data are supplied, wherein by means of the aircraft antenna the nearest ground station is reachable on the radio channel and the transmitted alarm data are received and stored.

23. Operational unit according to claim 21, **characterized in that** the data reproduction device has a radio link to the control unit (3).

24. Operational device according to claim 18, **characterized in that** the seat sensor is realized by a pressure- or load sensor.

25. Operational device according to claim 18, **characterized in that** the metal seat belt ends, by means of which the seat belt buckle is fastened, are connected to an electrical or electronic circuit, wherein an unfastening of the seat belt buckle gives rise to corresponding status information.

26. Operational device according to claim 18, **characterized in that** the alarm button is a manually operated pushbutton, which is connected to an electrical or electronic circuit that communicates corresponding status information to the data acquisition unit.

27. Operational device according to claim 17, **characterized in that** in the cabin portion that is located near the cockpit and monitored by the night-vision device there is provided in the floor region a hinged trapdoor, which closes in a gasproof manner and is equipped with a drive that is activated by the control unit (3), wherein disposed underneath said trapdoor is a security cell, which is connected to the trapdoor frame, and wherein by opening the trapdoor the opening of the security cell is cleared and then this opening is immediately closed again.

28. Operational device according to claim 27, **characterized in that** the security cell, which projects below the floor into a lower fuselage area, is of a gasproof and explosive-resistant design and may be filled with knock-out gas.

29. Operational device according to claim 1, 17 or 29, **characterized in that** the cabin portion that is located near the cockpit and monitored by the night-vision device is additionally partitioned off by means of a protective wall, which is equipped with a protective door, the movement of which door is effected by means of a door control unit, which is integrated into the protective door and has a data link to the control unit (3), wherein the protective wall is disposed transversely of the fuselage longitudinal axis and parallel to a cockpit wall, which is closable by a door, and is moreover framed by the wall- and ceiling area of the fuselage and is fastened to the fuselage structure or is fastened directly to the wall- and ceiling area.

30. Operational device according to claim 29, **characterized in that** the protective door is disposed within a protective-wall door aperture and is fastened in a hinged manner to the protective wall so as to be foldable at one side relative to the cabin portion, and the door control unit, which gives rise to a hinge movement activated by the control unit (3), is moreover disposed within the protective door and has a radio link or is connected by control- and signalling lines to the control unit (3).

31. Operational device according to claim 29, **characterized in that** the protective wall is of a double-walled design comprising a first and a second bulkhead wall and the protective door is disposed movably on rails or rollers between the two bulkhead walls, and there is positioned on or within the protective door on the non-visible edge- or peripheral door region, which extends in the direction of the aircraft vertical axis and is hidden by the two protective walls, the door control unit, which has a radio link or is connected by control- and signal lines to the control unit (3) and upon receiving information from the control unit (3) gives rise to the door movement.

32. Operational device according to claims 29 to 31, **characterized in that** the intermediate space delimited by the protective wall and the cockpit wall is sealed hermetically and in a gasproof manner and is fillable with a knock-out gas in order to render passive fellow passengers who are committing or are detected committing acts of violence.

33. Operational device according to claims 29 to 31, **characterized in that** hermetic and gasproof sealing of the protective door relative to the protective wall and of a cockpit door relative to the cockpit wall is effected.

## Revendications

1. Système de sécurité d'un avion commercial de transport de passagers, qui est prévu pour surveiller l'intérieur du fuselage de l'avion et prévenir par des mesures prophylactiques des actes violents de la part de passagers se trouvant dans l'avion, comprenant une unité de collecte d'informations (1), une unité de traitement d'informations (2), qui sont reliées l'une à l'autre et, à l'état activé, échangent en permanence des informations, ainsi qu'une unité de commande (3) et une unité d'alarme (4) qui sont reliées directement à la fois à l'unité de traitement d'informations (2) et entre elles et reçoivent des informations traitées par l'unité de traitement, l'unité d'alarme (4) convertissant les informations reçues en signaux d'alarme acoustiques et/ou optiques, et l'unité de commande (3) convertissant les informations reçues en instructions d'actionnement correspondantes, l'unité d'alarme (4) étant reliée à au moins une unité d'avertissement optique et/ou acoustique qui est/sont placée(s) à un endroit/des endroits définis dans la zone de la cabine située à la suite d'une zone de cockpit délimitée par rapport à elle et émet(tent) des informations d'avertissement optiques et/ou acoustiques clairement perceptibles, une unité d'avertissement optique et/ou acoustique étant également connectée à la zone de cockpit et émettant des informations d'avertissement optiques et/ou acoustiques, respectivement après actionnement d'un élément de libération qui est positionné notamment à proximité des unités d'avertissement installées à l'intérieur du fuselage, et plusieurs unités aval étant connectées à l'unité de commande (3) qui, après réception d'une instruction d'actionnement correspondante, mettent en oeuvre des fonctions de sécurité définies pour protéger les personnes se trouvant dans l'avion, et l'unité de collecte d'informations (1) étant reliée à différents appareils de collecte d'informations et/ou appareils de reproduction d'informations, **caractérisé en ce que** l'unité de traitement d'informations (2) est équipée d'une logique de traitement qui sert à effectuer une comparaison théorique/effective des informations d'état, transmises par les appareils de collecte et de reproduction d'informations de l'unité de collecte d'informations (1), avec des informations théoriques mémorisées dans cette logique et qui transmet le résultat de la comparaison à l'unité de commande (3) et/ou à l'unité d'alarme (4), dans la mesure où un seuil d'information fixe, qui correspond à l'état critique d'une situation de danger dans la zone cabine, est dépassé.

2. Système de sécurité selon la revendication 1, **caractérisé en ce que** la logique de traitement prévue dans l'unité de traitement d'informations (2) est destinée à évaluer les informations d'état reçues, selon des degrés d'escalade, et à déclencher également des actions automatiques.

3. Système de sécurité selon la revendication 1 ou 2, **caractérisé en ce que** la logique de traitement de l'unité de traitement d'informations (2) est également prévue pour recevoir des informations de service de vol qui lui sont transmises et qui sont prises en compte lors du traitement des informations d'état transmises par les appareils de collecte et de reproduction d'informations.

4. Système de sécurité selon la revendication 1, **caractérisé en ce que** les différents appareils de collecte d'informations, reliés à l'unité de collecte d'informations (1), sont installés dans la région des sièges de la cabine et à des endroits définis dans la cabine, et **en ce que** des appareils déplaçables de reproduction d'informations sont prévus.

5. Système de sécurité selon la revendication 1, **caractérisé en ce que** l'unité de commande (3) est reliée, sur le plan de la technique de connexion, respectivement à une unité aval pour un verrouillage de porte du cockpit, pour une coupure de l'éclairage de la cabine, pour un éblouissement dans la cabine, pour une occultation des vitres de la cabine, pour une diffusion sonore dans la cabine, pour une introduction de gaz fumigène dans la cabine, pour une introduction de gaz narcotique dans la cabine et/ou pour une surveillance par vision nocturne de la cabine, des appareils de commutation ou de surveillance, prévus dans l'unité aval concernée, pouvant être sollicités par voie électrique ou électronique et pouvant être activés par l'instruction d'actionnement respective pour déclencher la fonction de sécurité prévue.

6. Système de sécurité selon la revendication 1, **caractérisé en ce que** l'unité de commande (3) est équipée, sur le plan de la technique de connexion, d'un dispositif à commande manuelle et d'un dispositif automatique qui est installé de préférence dans le cockpit.

7. Système de sécurité selon la revendication 5, **caractérisé en ce que** le dispositif de verrouillage de porte est équipé d'un appareil de commutation électrique ou électronique qui déclenche un verrouillage hermétique et mécaniquement résistant de la porte du cockpit.

8. Système de sécurité selon la revendication 5, **caractérisé en ce que** le dispositif de coupure d'éclairage est équipé d'un appareil de commutation électrique ou électronique qui déclenche la coupure et notamment la coupure instantanée de l'éclairage de la cabine.

9. Système de sécurité selon la revendication 5, **caractérisé en ce que** le dispositif d'éblouissement de la zone cabine est équipé d'un appareil de commutation électrique ou électronique qui déclenche à l'aide d'un dispositif d'éblouissement, en particulier d'un stroboscope, l'éblouissement de personnes se déplaçant dans la zone cabine, dans la mesure où le système d'éclairage de la cabine a été coupé.

10. Système de sécurité selon la revendication 5, **caractérisé en ce que** le dispositif d'occultation des vitres de la cabine est équipé d'un appareil de commutation électrique ou électronique qui déclenche l'occultation de la vitre intérieure des hublots de la cabine.

11. Système de sécurité selon la revendication 5, **caractérisé en ce que** l'unité aval pour la diffusion sonore est équipée d'un appareil de commutation électrique ou électronique qui est relié à un générateur de bruits pour assurer la diffusion sonore dans la zone cabine.

12. Système de sécurité selon la revendication 5, **caractérisé en ce que** le dispositif d'introduction de gaz fumigène est équipé d'un appareil de commutation électrique ou électronique qui libère l'alimentation en gaz fumigène d'un réservoir rempli de gaz fumigène, le gaz fumigène pouvant être acheminé via des conduites à des injecteurs de gaz fumigène qui sont installés à des endroits définis dans la zone cabine, et de là dans la zone cabine et/ou la zone cabine partielle.

13. Système de sécurité selon la revendication 5, **caractérisé en ce que** le dispositif d'amenée de gaz narcotique est équipé d'un appareil de commutation électrique ou électronique qui libère l'alimentation en gaz narcotique d'un réservoir rempli de gaz narcotique, le gaz narcotique pouvant être acheminé via des conduites à des injecteurs de gaz narcotique qui sont installés à des endroits définis dans la zone cabine et/ou à des endroits adaptés du système de répartition d'air de l'installation de conditionnement d'air, et de là dans la zone cabine.

14. Système de sécurité selon les revendications 12 et 13, **caractérisé en ce qu'**un injecteur de gaz est installé à des endroits définis dans la zone cabine et est raccordé aux conduites reliées au réservoir de gaz fumigène et/ou de gaz narcotique.

15. Système de sécurité selon la revendication 5, **caractérisé en ce que** le dispositif de surveillance par vision nocturne est équipé d'un appareil de surveillance électronique qui est installé à des endroits définis dans la zone cabine.

16. Système de sécurité selon la revendication 15, **caractérisé en ce que** l'appareil de surveillance est un appareil de vision nocturne, de préférence une caméra infrarouge, qui, après obscurcissement de la zone cabine, assure la surveillance sans obstacle de celle-ci.

17. Système de sécurité selon la revendication 16, **caractérisé en ce qu'**au moins les appareils de vision nocturne qui surveillent une partie de cabine définie, située à proximité du cockpit, et/ou une partie de cabine sensible définie, sont connectés à une unité d'autodéfense qui peut être activée avec l'entrée en fonction de l'appareil de vision nocturne concerné et se déclenche en cas de séquences de mouvements enregistrées.

18. Système de sécurité selon la revendication 4, **caractérisé en ce qu'**un capteur de siège, disposé à l'intérieur de l'assise de chaque siège de l'avion, un verrou de ceinture de siège, qui ferme la ceinture de chaque siège de l'avion, et un bouton d'alarme, disposé à portée de la main de chaque siège de l'avion sont associés aux appareils de collecte d'informations qui sont installés dans la région du siège et transmettent des informations d'état correspondantes de la surveillance à l'unité de collecte d'informations (1).

19. Système de sécurité selon la revendication 4, **caractérisé en ce que** plusieurs détecteurs de mouvement, de préférence des détecteurs à infrarouges, sont installés sur la structure de paroi, sur le côté des rangées de siège et dans la direction de l'axe longitudinal du fuselage de l'avion, pour observer des endroits définis de la zone cabine, et sont reliés à l'unité de collecte d'informations (1) à laquelle ils transmettent des informations d'état concernant le mouvement de passagers ou de membres de l'équipage, dans la zone de la cabine.

20. Système de sécurité selon la revendication 4, **caractérisé en ce qu'**un dispositif de surveillance vidéo et audio, constitué de préférence d'une caméra vidéo et d'un microphone acoustique, est installé dans la zone cabine pour observer des endroits définis de la zone cabine et est relié à l'unité de collecte d'informations (1) à laquelle il transmet des informations d'état visuelles et/ou acoustiques concernant des passagers ou des membres de l'équipage, dans la zone de la cabine.

21. Système de sécurité selon la revendication 1, **caractérisé en ce que** l'appareil de reproduction d'informations individuel est une unité de radiotransmission qui est reliée sur le plan radiotechnique à l'unité de collecte d'informations (1), de préférence dans le cadre d'une plage de fréquences définie, et dont la communication permet d'activer l'unité d'alarme (4).

22. Système de sécurité selon la revendication 1, **caractérisé en ce que** l'unité d'alarme (4) est connectée à une antenne d'avion et à un enregistreur de voix et/ou d'images vidéo, auxquels sont transmises les informations d'avertissement acoustiques et/ou optiques, l'antenne d'avion permettant de joindre par voie radio la station au sol la plus proche et de recevoir et de mémoriser les informations d'avertissement émises.

23. Système de sécurité selon la revendication 21, **caractérisé en ce que** l'appareil de reproduction d'informations est relié par voie radio à l'unité de commande (3).

24. Système de sécurité selon la revendication 18, **caractérisé en ce que** le détecteur de siège est réalisé sous forme de détecteur de compression ou de charge.

25. Système de sécurité selon la revendication 18, **caractérisé en ce que** les extrémités métalliques de la ceinture de siège, qui assurent la fermeture du verrou de la ceinture, sont reliées à un circuit électrique ou électronique, l'ouverture du verrou de la ceinture de siège générant une information d'état correspondante.

26. Système de sécurité selon la revendication 18, **caractérisé en ce que** le bouton d'alarme est un bouton poussoir à commande manuelle, qui est relié à un circuit électrique ou électronique, lequel transmet une information d'état correspondante à l'unité de collecte d'informations.

27. Système de sécurité selon la revendication 17, **caractérisé en ce qu'**il est prévu, dans la partie de cabine située à proximité du cockpit et surveillée par l'appareil de vision nocturne, une trappe étanche aux gaz qui est réalisée dans le plancher et est équipée d'un moyen d'entraînement activé par l'unité de commande (3), une cellule de sécurité étant aménagée en dessous de cette trappe et reliée au cadre de celle-ci, et l'action d'ouverture de la trappe dégageant une ouverture de la cellule de sécurité qui est ensuite immédiatement refermée.

28. Système de sécurité selon la revendication 27, **caractérisé en ce que** la cellule de sécurité, qui s'étend sous le plancher et avance dans la partie inférieure du fuselage, est étanche aux gaz et résiste aux explosifs et peut être remplie d'un gaz narcotique.

29. Système de sécurité selon la revendication 1, 17 ou 29, **caractérisé en ce que** la partie de cabine située à proximité du cockpit et surveillée par l'appareil de vision nocturne est en plus séparée par une cloison de protection qui est équipée d'une porte de protection dont le mouvement est exécuté par une unité de commande de porte intégrée dans la porte de protection et reliée à l'unité de commande (3), par des moyens informatiques, ladite cloison de protection étant disposée transversalement à l'axe longitudinal du fuselage de l'avion et parallèlement à une paroi du cockpit pouvant être fermée par une porte, et qui est en outre encadrée par les parois et le plafond du fuselage et est fixée à la structure du fuselage ou est directement fixée aux parois et au plafond.

30. Système de sécurité selon la revendication 29, **caractérisé en ce que** la porte de protection est disposée dans une ouverture de porte de cloison de protection et est fixée sur un côté par des charnières à la cloison, de manière à pouvoir être rabattue côté cabine, et qu'en outre, l'unité de commande de porte, qui déclenche un mouvement de charnière activé par l'unité de commande (3), est disposée à l'intérieur de la porte de protection et est reliée à l'unité de commande (3) par voie radio ou par des lignes de commande et de transmission de signaux.

31. Système de sécurité selon la revendication 29, **caractérisé en ce que** la cloison de protection est réalisée avec une double paroi, constituée d'une première et d'une deuxième paroi de séparation, et la porte de protection est disposée entre les deux parois de séparation, avec possibilité de déplacement sur des rails ou sur des galets, et que l'unité de commande de porte est placée sur la porte ou dans la zone de bord ou d'arête non visible de la porte, qui s'étend dans le sens de l'axe vertical de l'avion et est recouverte par les deux parois de protection, l'unité de commande de porte étant reliée à l'unité de commande (3) par voie radio ou par des lignes de transmission de signaux et déclenchant le mouvement de la porte suite aux informations fournies par l'unité de commande (3).

32. Système de sécurité selon les revendications 29 à 31, **caractérisé en ce que**, pour neutraliser des passagers ayant commis des actes violents ou dont on craint qu'ils vont les commettre, l'espace délimité par la cloison de protection et la cloison du cockpit est hermétique et étanche aux gaz et peut être rempli avec un gaz narcotique.

33. Système de sécurité selon les revendications 29 à 31, **caractérisé en ce que** la porte de protection et une porte de cockpit sont hermétiques et étanches aux gaz, respectivement par rapport à la cloison de protection et la cloison du cockpit.
